# FASCICULE DE BREVET EUROPEEN

(11) **EP 0 738 466 B1**
(45) Date de publication et mention de la délivrance du brevet: **18.11.1998**
(21) Numéro de dépôt: 95440054.5
(22) Date de dépôt: 16.08.1995
(51) Int. Cl.: A01J 25/13

(54) **Dispositif de bloc-moule de contenance variable pour la fabrication de fromages à paté molle ou à paté pressée et dispositif automatique de remplissage et de moulage en continu**
Weich- oder Hartkäseherstellungsform und automatische Einfüll- und Kontinueformvorrichtung
Variable capacity mould for making soft or hard cheese, and automatic filling and continuous moulding device

(30) Priorité: 20.04.1995 FR 9504893
(43) Date de publication de la demande: 23.10.1996
(73) Titulaire: INOTEC S.A., F-01700 Beynost (FR)
(72) Inventeur: Roux, Michel, F-69009 Lyon (FR)
(74) Mandataire: Hecké, Gérard

(56) Documents cités:
- EP-A- 0 497 423
- DE-A- 2 327 419
- FR-A- 2 290 148
- FR-A- 2 449 407
- US-A- 3 802 332

## Description

La présente invention a pour objet, dans le domaine de la fabrication des fromages à pâte molle ou à pâte pressée, un dispositif de bloc-moule de contenance variable (voir p.ex. FR-A-2290148), ainsi qu'un dispositif automatique de remplissage et de moulage en continu.

La fabrication des fromages à pâte molle comprend une opération de remplissage , à l'aide de caillé, de moules pourvus d'orifices permettant l'égouttage du sérum, tandis que la fabrication des fromages à pâte pressée comprend une opération supplémentaire de pressage du caillé.

En pratique, plusieurs moules sont accolés les uns aux autres et maintenus par un cadre, l'ensemble formant un bloc-moule, l'égouttage étant réalisé en superposant plusieurs plateaux de manière à former une colonne qui est soumise à une température régulée.

Les fromages étant de formes et d'épaisseurs différentes il existe autant de bloc-moules que de fromages, ce qui présente un inconvénient.

De plus, dans le processus de fabrication la principale difficulté est d'obtenir des fromages sensiblement tous de mêmes dimensions.

D'autre part, le remplissage des moules est généralement réalisé mécaniquement, mais l'égalisation est faite manuellement au moyen d'une raclette, la répartition étant toutefois imprécise.

Pour pallier cet inconvénient on a proposé dans le document FR-A-2.613.583 un dispositif automatique de remplissage de moules, dans lequel le caillé est dosé préalablement au remplissage des moules. Le dispositif comprend à cet effet d'une part un bac de répartition comportant un fond percé d'une multiplicité d'ouvertures prolongées chacune vers le bas par un manchon cylindrique, d'autre part, sous ledit bac de répartition, un bloc, mobile en déplacement vertical, percé de chambres de moulage cylindriques étanches dans lesquelles sont introduits les manchons, le fond desdites chambres étant constitué d'une plaque horizontale amovible, sous laquelle est placé un bloc-moule dont les moules sont disposés en regard desdites chambres.

Le fonctionnement de ce dispositif est le suivant : une quantité prédéterminée de caillé préalablement dessérumé est déversée dans le bac de répartition et une raclette se déplace contre le fond, puis le bloc de chambres de moulage monte pour faire déborder les chambres trop remplies, le trop-plein étant alors réparti par la raclette dans les chambres pas assez remplies et ainsi de suite jusqu'à une parfaite répartition, enfin le fond des chambres est escamoté et leur contenu tombe dans les moules qui sont ensuite évacués.

Ce dispositif présente de nombreux inconvénients, outre sa complexité, le coulissement des manchons dans les chambres crée des rétentions de produit et pose des problèmes d'hygiène et de contamination, il en est de même pour le fond des chambres avec de plus une perte importante de caillé et la brisure des grains de caillé.

La perte de caillé intervient notamment lors du dessérumage préalable, en outre un caillé dessérumé ne se prête pas facilement à l'opération de répartition.

La présente invention a pour but de remédier à ces divers inconvénients en proposant un dispositif de bloc-moule de contenance variable, autorisant la fabrication de fromages à pâte molle ou à pâte pressée d'épaisseurs différentes, ainsi qu'un dispositif automatique de remplissage et de moulage en continu.

Le dispositif de bloc-moule objet de la présente invention comprenant des moules déformables élastiquement dans le sens vertical se caractérise en ce que, la paroi tubulaire déformable et/ou le fond de chaque moule sont percés d'orifices permettant le dessérumage, et que le fond de chaque moule comporte extérieurement un moyen d'accrochage apte à être engagé dans un moyen de retenue permettant de fixer la hauteur de chacun desdits moules.

Le dispositif de remplissage et de répartition objet de la présente invention comprenant sur un bâti une chaîne ou bande sans fin transportant horizontalement dans sa partie supérieure, en aval d'un poste de remplissage, des ensembles de dosage comportant chacun une face plane horizontale percée d'ouvertures débouchant chacune dans une chambre de dosage se caractérise en ce que les chambres de dosage sont déformables élastiquement dans le sens vertical, et percées d'orifices permettant le dessérumage, le fond de chaque chambre comportant extérieurement un moyen d'accrochage qui s'engage dans des rampes de guidage longitudinales solidaires du bâti, lesdites rampes s'élevant en pente douce par paliers successifs, à chacun desquels agit un moyen de répartition du caillé en surface d'un ensemble de dosage contre la surface plane de celui-ci.

Selon une caractéristique additionnelle du dispositif de remplissage et de répartition selon l'invention, un poste de bridage et de retournement permet, après la répartition, la solidarisation sur chacun des ensemble de dosage d'un bloc-moule classique en position retournée.

Selon une caractéristique additionnelle du dispositif selon l'invention les ensembles de dosage font partie intégrante d'une bande et sont légèrement espacés les uns des autres, le bridage des bloc-moules classiques et le retournement étant réalisés sur une roue carrée dont l'axe de rotation est mobile en translation verticale.

Selon un premier mode de réalisation les moules ou les chambres de dosage selon l'invention sont réalisés en une matière plastique semi-rigide moulée en forme de soufflet sur un cadre métallique.

Selon un second mode de réalisation les moules ou les chambres de dosage selon l'invention sont réalisés en une matière élastique moulée sur un cadre métallique.

Les avantages et les caractéristiques de la présente invention ressortiront plus clairement de la description qui suit et qui se rapporte au dessin annexé, lequel en représente quelques modes de réalisation non limitatifs.

Dans le dessin annexé :
- la figure 1 représente une vue en élévation d'une colonne de bloc-moules selon l'invention.
- la figure 2 représente une vue partielle en coupe d'un premier mode de réalisation d'un moule d'un dispositif selon l'invention.
- la figure 3 représente une vue partielle en coupe d'un second mode de réalisation d'un moule d'un dispositif selon l'invention.
- la figure 4 représente une vue schématique en élévation d'un premier mode de réalisation du dispositif de remplissage et de répartition selon l'invention.
- la figure 5 représente une vue schématique en élévation d'un second mode de réalisation du dispositif de remplissage et de répartition selon l'invention.

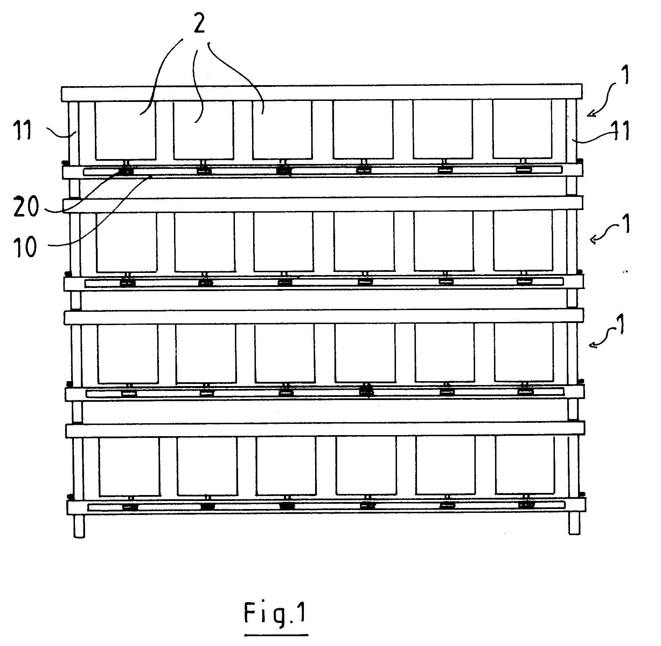

Si on se réfère à la figure 1 on peut voir qu'un dispositif de bloc-moule 1 selon l'invention comprend des moules 2 déformables élastiquement dans le sens de la hauteur dont le fond comporte extérieurement un moyen d'accrochage 20 apte à être engagé dans un guide 10 monté coulissant par ses extrémités, avec possibilités de blocage, sur des pieds verticaux 11 du bloc-moule 1, la position du guide 10 définissant la hauteur des moules 2.

Dans le cas d'une fabrication de fromages à pâte pressée, il convient de brider sur le bloc-moule 1 une plaque, non représentée, et d'exercer une pression sur le guide 10 en direction de ladite plaque pour presser le contenu des moules 2.

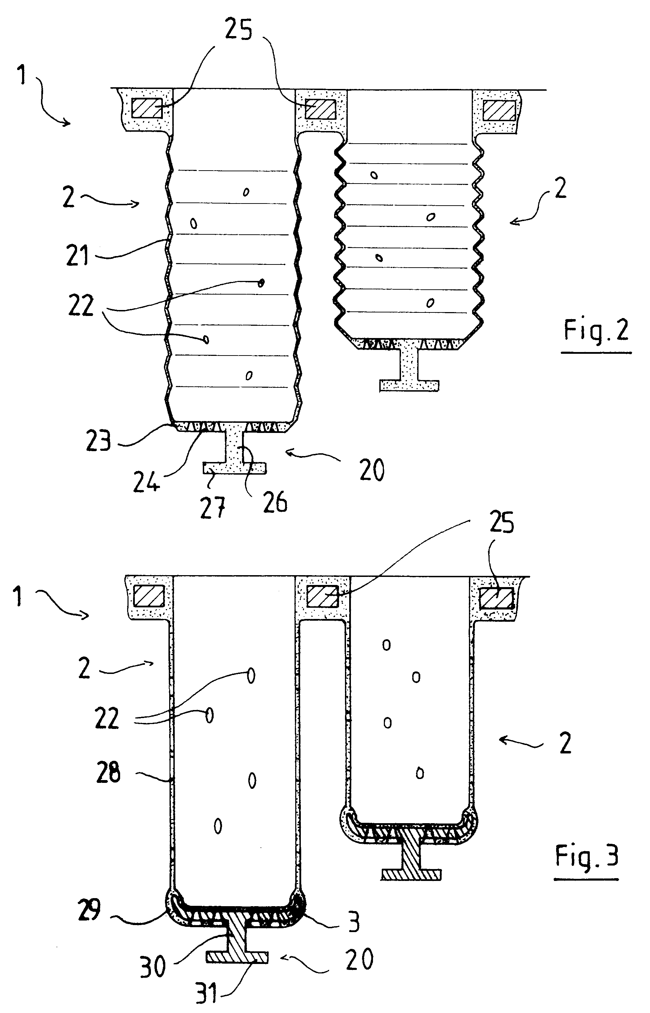

Si on se réfère maintenant à la figure 2 on peut voir que selon un premier mode de réalisation un moule 2 comporte une paroi tubulaire 21 en forme de soufflet, percée d'orifices 22 et qu'il est fermé inférieurement par un fond 23 également percé d'orifices 24, l'ensemble étant moulé sur un cadre métallique 25 et le matériau employé étant une matière plastique semi-rigide.

Le moyen d'accrochage 20 solidaire du fond 23 du moule 2 vient de moulage et comporte une partie centrale verticale cylindrique 26 et une partie extrême 27 en forme de disque apte à s'engager dans le guide 10.

Si on se réfère maintenant à la figure 3 on peut voir que selon un second mode de réalisation un moule 2 comporte une paroi tubulaire 28 percée d'orifices 22 également moulée sur un cadre métallique 25, mais le matériau employé est un élastomère résistant et élastique.

Le moyen d'accrochage est un insert métallique 3 noyé dans le fond 29 du moule 2, comportant une partie centrale cylindrique 30 et une partie extrême 31 en forme de disque.

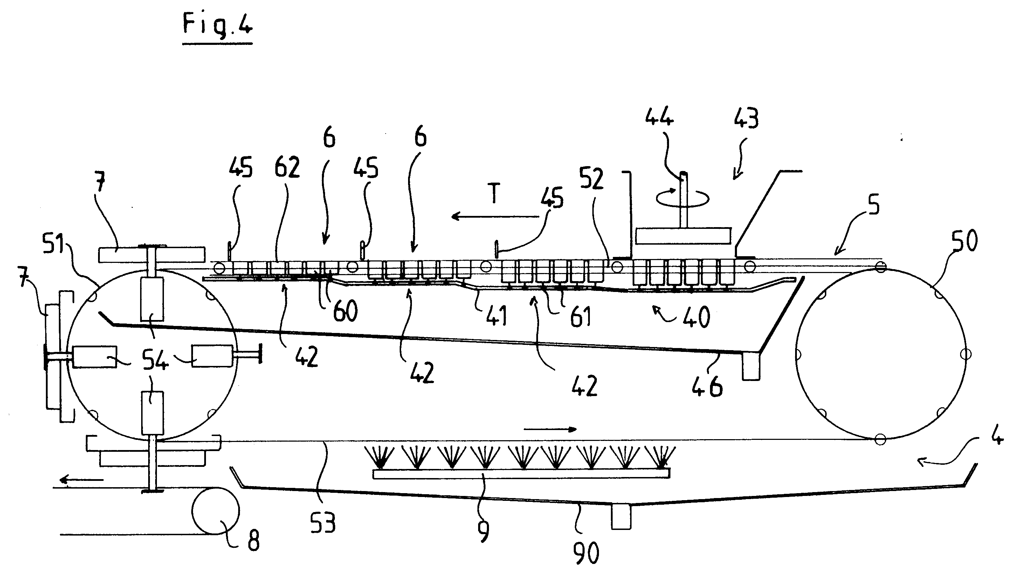

Si on se réfère maintenant à la figure 4 peut voir que le dispositif de remplissage et de répartition selon l'invention, dans un premier mode de réalisation, comporte sur un bâti 4 une chaîne de transfert 5 entraînée en translation dans le sens de la flèche T entre une roue 50 et une roue 51.

A la chaîne 5 sont solidarisés des ensembles de dosage 6, similaires aux bloc-moules 1, comprenant chacun des chambres de dosages 60 élastiquement déformables dans le sens vertical, similaires aux moules 2.

Une rampe 40 solidaire du bâti 4 s'étend sous le brin actif horizontal supérieur 52 de la chaîne 5, la rampe 40 étant essentiellement constituée de profilés 41, dont un seul est visible sur la figure, positionnés parallèlement côte à côte, et qui s'élèvent en pente douce par paliers successifs horizontaux 42 depuis la roue 50 jusqu'à la roue 51 pour se rapprocher de la chaîne 5.

Les chambres de dosage 60 comprennent chacune, solidarisé à la paroi extérieure de leur fond, un moyen d'accrochage 61 apte à s'engager dans les profilés 42 de la rampe 40, en sorte que les chambres de dosage 60 sont en extension maximum à proximité de la roue 50 et en extension minimum à proximité de la roue 51.

A proximité et en aval de la roue 50, une trémie 43, comprenant un agitateur lent 44, déverse une quantité dosée d'un mélange de caillé et de sérum dans l'ensemble de dosage 6 qu'elle surplombe.

Au fur et à mesure du déplacement des ensembles de dosage 6 dans le sens de la flèche T entre les roue 50 et 51, le volume intérieur des chambres de dosage 60 diminue à chaque palier, et sous l'action de racloirs 45 qui peuvent être fixes et disposés transversalement, ou être mobiles en rotation selon un axe vertical, et qui affleurent le plan horizontal supérieur 62 des ensembles de dosage 6, le caillé est régulièrement réparti, tandis que le dessérumage s'opère, le sérum étant évacué dans une goulotte 46 placée sous la rampe 40.

Au dernier palier 42, à proximité de la roue 51, les chambres de dosage 60 sont toutes remplies de la même quantité de caillé et l'ensemble de dosage 6 passe sur la roue 51 ou un bloc-moule 7, de type classique, est bridé sur ledit ensemble de dosage 6, le bridage étant réalisé au moyen de vérins 54 solidaires de la roue 51.

Lors du retournement, du fait de la rotation de la roue 51, le caillé passe de l'ensemble de dosage 6 dans le bloc-moule 7, puis lorsque le retournement est complètement réalisé, le bloc-moule 7 est débridé et est évacué sur un convoyeur 8, tandis que l'ensemble de dosage 6, toujours solidaire de la chaîne 5, est lavé par passage devant une rampe de lavage 9 agissant en regard du brin inférieur 53 de la chaîne 5, l'eau de lavage étant évacuée dans une goulotte 90.

Il y a lieu de noter que le poste de bridage et de retournement peut être supprimé, les ensembles de dosage étant alors soit empilés comme les bloc-moules 1 si ils sont semblables à ceux-ci, soit introduits dans un châssis, non représenté, comprenant des moyens permettant la solidarisation des moyens d'accrochage 61.

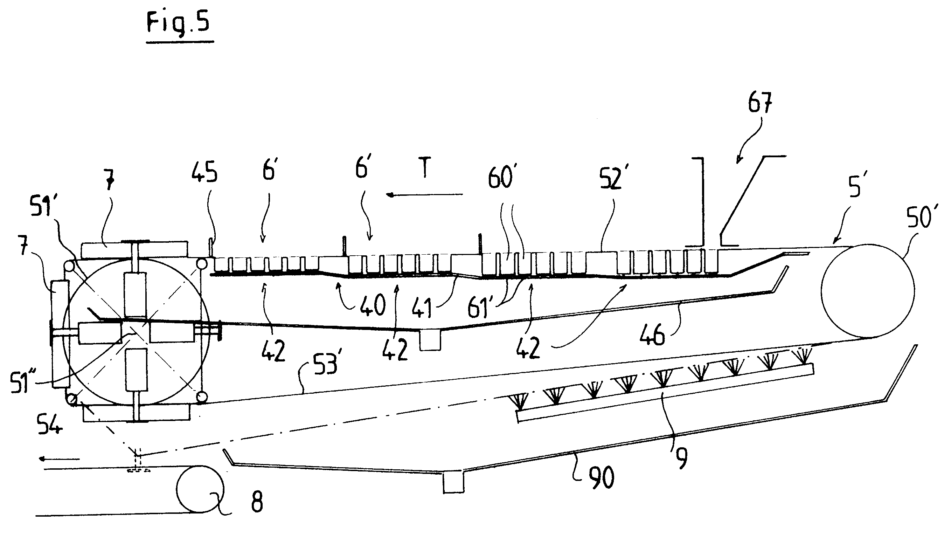

Si on se réfère maintenant à la figure 5 représentant un second mode de réalisation du dispositif selon l'invention, on peut voir qu'une bande 5', incorporant des ensembles de dosage 6' comprenant des chambres de dosage 60', est tendue entre deux roues 50' et 51'.

La roue 51', qui permet le retournement, est carrée et son axe de rotation 51'' est mobile en translation verticale en sorte que le brin supérieur 52' de la bande 5' est toujours horizontal.

Dans ce mode de réalisation, le remplissage est réalisé en continu par une trémie 47, alors que les chambres de dosage 60' sont en extension, la tension étant maintenue par la rampe 40 par l'intermédiaire des moyens d'accrochage 61'. Après la répartition du caillé et le bridage d'un bloc-moule 7, les moyens d'accrochage 61' sont libérés ce qui facilite le transvasement du caillé.

Il va de soi que la présente invention ne saurait être limitée a la description qui précède de quelques-uns de ses modes de réalisation, susceptibles de subir un certain nombre de modifications sans pour autant sortir du cadre de l'invention telle que définier par les revendications jointes.

## Revendications

1. Dispositif de bloc-moule de contenance variable pour la fabrication de fromages à pâte molle ou à pâte pressée, comprenant des moules (2, 60) déformables élastiquement dans le sens vertical, caractérisé en ce que la paroi tubulaire déformable et/ou le fond de chaque moule sont percés d'orifices (22, 24) permettant le dessérumage, et que le fond (23, 29) de chaque moule comporte extérieurement un moyen d'accrochage (20, 61) apte à être engagé dans un moyen de retenue (10, 40) permettant de fixer la hauteur de chacun desdits moules (2, 60).

2. Dispositif selon la revendication 1 caractérisé en ce que le bloc-moule 1 comporte des pieds verticaux (11) sur lesquels coulissent verticalement avec possibilité de blocage des profilés (10) dans lesquels sont engagés les moyens d'accrochage (20) des moules (2).

3. Dispositif selon la revendication 1 ou la revendication 2 caractérisé en ce qu'il comporte une plaque destinée à être bridée sur chacun des bloc-moules (1) après répartition du caillé, afin de permettre le pressage dudit caillé par compression des moules (2).

4. Dispositif automatique de remplissage et de moulage en continu comprenant sur un bâti (4) une chaîne (5) ou bande sans fin (5') transportant horizontalement dans sa partie supérieure, en aval d'un poste de remplissage (43, 47), des ensembles de dosage (6, 6') comportant chacun une face plane horizontale (62) percée d'ouvertures débouchant chacune dans une chambre de dosage (60, 60') caractérisé en ce que les chambres de dosage sont déformables élastiquement dans le sens vertical, et percées d'orifices permettant le dessérumage, le fond desdites chambres (60, 60') comportant extérieurement un moyen d'accrochage (61, 61') qui s'engager dans des rampes de guidage longitudinales (40) solidaires du bâti, lesdites rampes (40) s'élevant en pente douce par paliers successifs (42) à chacun desquels agit un moyen de répartition (45) du caillé en surface d'un ensemble de dosage (6, 6') contre la surface plane (62) de celui-ci.

5. Dispositif selon la revendication 4 caractérisé en ce que les ensembles de dosage (6) sont solidarisés à la chaîne ou bande (5), et en ce que la roue (51) à proximité de laquelle la répartition du caillé est achevée, comporte des moyens (54) permettant de brider sur chacun des ensembles de dosage (6) un bloc-moule classique (7) dans lequel est transvasé le caillé lors du retournement, un convoyeur (8) placé sous ladite roue (51) permettant l'évacuation dudit bloc-moule (7) après débridage.

6. Dispositif selon la revendication 4 caractérisé en ce que les ensembles de dosage (6') font partie intégrante de la bande sans fin (5') et sont légèrement espacés les uns des autres, et en ce que la roue (51'), à proximité de laquelle la répartition du caillé est achevée, est carrée et en rotation sur un axe (51'') mobile en translation verticale afin que le brin supérieur (52') de ladite bande (5') demeure horizontal, ladite roue (51') comportant des moyens (54) de bridage sur chacun desdits ensembles de moulage d'un bloc-moule classique (7) dans lequel se déverse le caillé lors du retournement, un convoyeur (8) placé sous ladite roue (51') permettant l'évacuation dudit bloc-moule (7) après débridage.

7. Dispositif selon l'une quelconque des revendications 4, 5 ou 6 caractérisé en ce que les moyens de répartition du caillé en surface des ensembles de dosage (6, 6') sont des racloirs (45) fixes transversaux ou mobiles en rotation autour d'un axe vertical.

8. Dispositif selon l'une quelconque des revendications de 4 à 7 caractérisé en ce qu'il comporte en regard du brin inférieur (53, 53') de la chaîne (5) ou bande (5') une rampe (9) de lavage des ensembles de moulage (6, 6').

9. Dispositif selon l'une quelconque des revendications précédentes caractérisé en ce que les moules (2) ou chambres de dosage (60, 60') sont réalisée en une matière plastique semi-rigide moulée, en forme de soufflet (21), sur un cadre métallique (25).

10. Dispositif selon la revendication 9 caractérisé en ce que le moyen d'accrochage (20) vient de moulage et comporte une partie centrale cylindrique (26) et une partie extrême (27) en forme de disque apte à être maintenue dans le moyen de retenue (10, 40).

11. Dispositif selon l'une quelconque des revendications de 1 à 8 caractérisé en ce que les moules (2) ou les chambres de dosage (60, 60') sont réalisées en une matière élastique moulée sur un cadre métallique (45).

12. Dispositif selon la revendication 11 caractérisé en ce que le moyen d'accrochage (20) est un insert métallique (3) noyé dans le fond (29) du moule (2) ou de la chambre de dosage (60, 60'), et comporte une partie centrale (30) et une partie extrême (31) en forme de disque apte à être maintenue dans le moyen d'accrochage (40) est un insert métallique (3) noyé dans le fond (49) de la chambre de dosage (4), et comporte une partie centrale (30) et une partie extrême (31) en forme de disque apte à être maintenue dans le moyen de retenue (10, 40).

## Claims

1. A variable capacity mould for making soft or hard cheeses, comprising moulds (2, 60) elastically deformable in the vertical direction, characterized in that the deformable tubular wall and/or bottom of each mould are drilled with holes (22, 24) enabling the serum to be drained off, and that the bottom (23, 29) of each mould externally comprises a securing means (20, 61) designed to be engaged in a holding means (10, 40) enabling the height of each of said moulds (2, 60) to be fixed.

2. The device according to claim 1, characterized in that the mould (1) comprises vertical legs (11) on which profiled parts (10), in which the holding means (20) of the moulds (2) are engaged, slide vertically with the possibility of securing.

3. The device according to claim 1 or 2, characterized in that it comprises a plate designed to be clamped onto each of the moulds (1) after distribution of the curds to enable pressing of said curds by compression of the moulds (2).

4. An automatic filling and continuous moulding device comprising on a frame (4) an endless chain (5) or belt (5') transporting horizontally in its upper part, down-line from a filling location (43, 47), dosing assemblies (6, 6') each comprising a horizontal flat face (62) drilled with openings each opening out into a dosing chamber (60, 60'), characterized in that the dosing chambers (60, 60') are elastically deformable in the vertical direction and drilled with holes enabling the serum to be drained off, the bottom of said chambers (60, 60') externally comprising a hooking means (61, 61') which engages in longitudinal guide ramps (40) ascending with a gentle slope in successive stages (42) at each of which a means (45) for distribution of the curds acts at the surface of a dosing assembly (6, 6') against the fiat surface (62) of the latter.

5. The device according to claim 4, characterized in that the dosing assemblies (6) are securedly affixed to the chain or belt (5), and that the wheel (51) near to which distribution of the curds takes place comprises means (54) enabling a conventional mould (7), into which the curds are poured when turning takes place, to be clamped onto each of the dosing assemblies (6), a conveyor (8) placed under said wheel (51) enabling said mould (7) to be removed after the latter has been unclamped.

6. The device according to claim 4, characterized in that the dosing assemblies (6') form an integral part of the endless belt (5') and are slightly spaced apart from one another, and that the wheel (51'), near to which distribution of the curds takes place, is square and in rotation on a spindle (51'') movable in vertical translation so that the upper strand (52') of said belt (5') remains horizontal, said wheel (51') comprising means (54) for clamping a conventional mould (7), into which the curds are poured when turning takes place, onto each of said moulding assemblies, a conveyor (8) placed under said wheel (51') enabling said mould (7) to be removed after the latter has been unclamped.

7. The device according to any one of the claims 4, 5 or 6, characterized in that the means for distribution of the curds at the surface of the dosing assemblies (6, 6') are scrapers (45) which are either fixed and transverse or movable in rotation around a vertical axis.

8. The device according to any one of the claims 4 to 7, characterized in that it comprises a ramp (9) for washing the moulding assemblies (6, 6') located facing the lower strand (53, 53') of the chain (5) or belt (5').

9. The device according to any one of the foregoing claims, characterized in that the moulds (2) or dosing chambers (60, 60') are made of a moulded semi-rigid plastic material in the form of a bellows (21) on a metal frame (25).

10. The device according to claim 9, characterized in that the securing means (20) is achieved by moulding and comprises a cylindrical central part (26) and a disk-shaped end part (27) able to be held in the holding means (10, 40).

11. The device according to any one of the claims 1 to 8, characterized in that the moulds (2) or dosing chambers (60, 60') are made of an elastic material moulded onto a metal frame (45).

12. The device according to claim 11, characterized in that the securing means (20) is a metal insert (3) sunk in the bottom (29) of the mould (2) or dosing chamber (60, 60') and comprises a central part (30) and a disk-shaped end part (31) able to be held in the holding means (40) which is a metal insert (3) sunk in the bottom (49) of the dosing chamber (4), and comprises a central part (30) and a disk-shaped end part (31) able to be held in the holding means (10, 40).

## Patentansprüche

1. Formblock-Vorrichtung mit veränderlichem Fassungsvermögen für die Herstellung von Weich- oder Hartkäse, mit im senkrechten Sinn elastisch deformierbaren Formen (2, 60), dadurch gekennzeichnet, dass die deformierbare rohrförmige Wand und/oder der Boden jeder Form von Öffnungen (22, 24) durchbohrt sind die den Molkeabfluss ertauben, und dass der Boden (23, 29) jeder Form aussen ein Aufhängemittel (20, 61) besitzt, das in ein Rückhaltmittel (10, 40) eingeführt werden kann, was es ermöglicht, die Höhe jeder der genannten Formen (2, 60) zu bestimmen.

2. Vorrichtung gemäss Anspruch 1, dadurch gekennzeichnet, dass der Formblock (1) senkrechte Füsse (11) aufweist, auf denen senkrecht mit Blockierungsmöglichkeit Profilstäbe (10) gleiten können, in denen die Aufhängemittel (20) der Formen (2) eingeführt sind.

3. Vorrichtung gemäss Anspruch 1 oder Anspruch 2, dadurch gekennzeichnet, dass sie eine Platte aufweist, die auf jedem der Formblöcke (1) nach Verteilung der geronnenen Milchmasse festgeklammert wird, um ein Pressen der genannten geronnenen Milchmasse durch die Komprimierung der Formen (2) zu erlauben.

4. Automatische Einfüll- und Kontinueformvorrichtung, die auf einem Gestell (4) eine Kette (5) oder ein endloses Band (5') aufweist, das waagerecht in seinem oberen Teil, unterhalb einer Einfüllstelle (43, 47), Dosierungseinheiten (6, 6') transportiert, von denen jede eine ebene waagerechte Seite (62) aufweist, die von Öffnungen durchbohrt ist, die jede in eine Dosierungskammer (60, 60') einmündet, dadurch gekennzeichnet, dass die Dosierungskammern im senkrechten Sinn elastisch deformierbar sind und von Öffnungen durchbohrt sind, die den Molkeabfluss ertauben, wobei der Boden der genannten Kammern (60, 60') aussen ein Aufhängemittel (61, 61') aufweist, das sich in die mit dem Gestell verbundenen länglichen Führungsrampen (40) einfügt, wobei die genannten Rampen (40) mit leichter Neigung in aufeinanderfolgenden Stufen (42) ansteigen, bei denen jeweils ein Verteilungsmittel (45) der geronnenen Milchmasse an der Oberfläche einer Dosierungseinheit (6, 6') gegen die ebene Oberfläche (62) dieser Einheit tätig wird.

5. Vorrichtung gemäss Anspruch 4, dadurch gekennzeichnet, dass die Dosierungseinheiten (6) mit der Kette oder dem Band (5) verbunden sind, und dass das Rad (51), in dessen Nähe die Verteilung der geronnenen Milchmasse beendet wird, Mittel (54) aufweist, die es ermöglichen, auf jeder der Dosierungseinheiten (6) einen herkömmlichen Formblock (7) festzuspannen, in den die geronnene Milchmasse beim Umdrehen umgefüllt wird, wobei ein unter dem genannten Rad (51) angebrachter Förderer (8) die Evakuierung des genannten Formblocks (7) nach dem Abspannen erlaubt.

6. Vorrichtung gemäss Anspruch 4, dadurch gekennzeichnet, dass die Dosierungseinheiten (6') einen vollständigen Bestandteil des endlosen Bandes (5') bilden, und in kleinen Abständen voneinander liegen, und dass das Rad (51'), in dessen Nähe die Verteilung der geronnenen Milchmasse beendet wird, viereckig und drehbar auf einer beweglichen Achse (51'') mit senkrechter Verschiebung ist, damit der obere Strang (52') des genannten Bandes (5') waagerecht bleibt, wobei das genannte Rad (51) Spannmittel (54) auf jeder der genannten Formeinheiten eines herkömmlichen Formblockes (7) aufweist, in den sich die geronnene Milchmasse beim Umdrehen entleert, wobei ein unter dem genannten Rad (51) angebrachter Förderer (8) die Evakuierung des genannten Formblocks (7) nach dem Abspannen erlaubt.

7. Vorrichtung gemäss einem der Ansprüche 4, 5 oder 6, dadurch gekennzeichnet, dass die Mittel zur Verteilung der geronnenen Milchmasse an der Oberfläche der Dosierungseinheiten (6, 6') aus festen transversalen oder beweglichen, um eine senkrechte Achse drehbaren, Abstreichern (45) bestehen.

8. Vorrichtung gemäss einem der Ansprüche 4 bis 7, dadurch gekennzeichnet, dass sie gegenüber dem unteren Strang (53, 53') der Kette (5) oder des Bandes (5') eine Rampe (9) zum Waschen der Dosierungseinheiten (6, 6') aufweist.

9. Vorrichtung gemäss einem der vorhergehenden Ansprüche, dadurch gekennzeichnet, dass die Formen (2) oder Dosierungskammern (60, 60') aus einem halb-starren geformten Plastikmaterial in Faltenform (21) auf einem Metallrahmen (25) hergestellt sind.

10. Vorrichtung gemäss dem Anspruch 9, dadurch gekennzeichnet, dass das Aufhängemittel (20) gegossen ist und einen mittleren, zylindrischen Teil (26) aufweist, und einen scheibenförmigen extremen Teil (27), der in dem Rückhaltmittel (10, 40) gehalten werden kann.

11. Vorrichtung gemäss irgendeinem der Ansprüche 1 bis 8, dadurch gekennzeichnet, dass die Formen (2) oder die Dosierungskammern (60, 60') aus einem elastischen, geformten Material auf einem Metallrahmen (45) hergestellt sind.

12. Vorrichtung gemäss Anspruch 11, dadurch gekennzeichnet, dass das Aufhängemittel (20) eine Metall-Einlage (3) ist, eingebettet im Boden (29) der Form (2) oder der Dosierungskammer (60, 60'), und einen mittleren Teil (30) und einen scheibenförmigen extremen Teil (31) aufweist, der in dem Aufhängemittel (40) gehalten werden kann, das eine im Boden (49) der Dosierungskammer (4) eingebettete Metall-Einlage (3) ist, und einen zentralen Teil (30) und einen scheibenförmigen extremen Teil (31) aufweist, der in dem Rückhaltmittel (10, 40) gehalten werden kann.
